# EUROPÄISCHE PATENTSCHRIFT

(11) **EP 0 620 059 B1**
(45) Veröffentlichungstag und Bekanntmachung des Hinweises auf die Patenterteilung: **05.03.1997**
(21) Anmeldenummer: 94105805.9
(22) Anmeldetag: 14.04.1994
(51) Int. Cl.: B21F 15/00

(54) **Verfahren zur Herstellung von Profildraht**
Method of making a profile wire
Procédé pour fabriquer un fil métallique à section tronçonique

(30) Priorität: 14.04.1993 DE 4312122
(43) Veröffentlichungstag der Anmeldung: 19.10.1994
(73) Patentinhaber: Graf + Cie AG, CH-8640 Rapperswil (CH)
(72) Erfinder: Graf, Ralph, CH - 8807 Freienbach (CH)
(74) Vertreter: Patentanwälte Leinweber & Zimmermann

(56) Entgegenhaltungen:
- AT-B- 391 826
- DE-A- 2 343 579
- US-A- 2 786 788

## Beschreibung

Die Erfindung betrifft ein Verfahren zur Herstellung von Profildraht durch Profilpressen des Ausgangsdrahtes, insbesondere zur Herstellung von Ganzstahlgarnituren.

Im bekannten Stand der Technik werden Profildrähte üblicherweise durch Profilwalzen von Ausgangsdrähten mit im wesentlichen kreisflächenförmigem Querschnitt in die gewünschte Form bzw. das gewünschte Profil hergestellt.

Ein Nachteil der bekannten Verfahren besteht darin, daß mit ihnen das Endprofil durch Verformen des Ausgangsdrahtes mit einheitlichem Ausgangsquerschnitt zu erreichen ist, was nur durch eine Vielzahl von Verformungs-schritten erreichbar ist.

Der Erfindung liegt die Aufgabe zugrunde, das bekannte Verfahren zur Herstellung von Profildraht so weiter auszugestalten, daß das fertige Verfahrensprodukt auf einfache Weise unter Vermeidung unnötiger Verfahrensschritte herstellbar ist.

Erfindungsgemäß wird diese Aufgabe durch Zusammenfügen und Verbinden von zumindest zwei Ausgangsdrähten, entlang von im wesentlichen in Längsrichtung der Drähte verlaufenden Gebieten und durch Profilpressen der verbundenen Ausgangsdrähte unter Konstanthalten der Verhältnisse der Querschnittsflächen senkrecht zur Längsrichtung der Ausgangsdrähte zueinander gelöst.

Insbesondere durch das Konstanthalten der Querschnittsflächenverhältnisse wird mit einem derartigen Verfahren erreicht, daß die erzeugten Profildrähte keine Krümmung entlang ihrer Längsausdehnung aufweisen. Weiterhin sind bei nach diesem Verfahren hergestellten Profildrähten keine Krümmungen oder sonstige Deformationen der Verbindungsgebiete vorhanden, entlang welcher die Ausgangsdrähte vor dem Pressen miteinander verbunden worden sind, auf. Ein weiterer Vorteil des erfindungsgemäßen Verfahrens besteht darüber hinaus darin, daß die bei der Herstellung der Verbindung zwischen den Drähten erzeugten Rauhigkeiten entlang der oder den Verbindungsgebieten durch die anschließenden Formprozesse praktisch zwangsläufig beseitigt werden. Weiterhin können bei einem solchen Verfahren die Gebiete, entlang welcher die Ausgangsdrähte zusammengefügt werden, so ausgewählt werden, daß die Ausgangsdrähte auf einfache Weise miteinander verbunden werden können, während die Verbindungsgebiete in dem durch das Formpressen erhaltenen Profildraht der Herstellung einer festen Verbindung nicht mehr zugänglich sein müssen.

Insbesondere bei nach den bekannten Verfahren hergestellten Profildrähten für Ganzstahlgarnituren, die beispielsweise auf Kardenwalzen aufgezogen werden, hat sich die Tatsache als nachteilig herausgestellt, daß Fußteil und Blatteil derartiger Profildrähte verschiedene Materialeigenschaften aufweisen sollten. Für den Fußteil ist es von Vorteil, wenn er sehr biegsam ist, damit er beim Aufziehen auf die Walze nicht bricht oder reißt, wohingegen sich der Blatteil durch eine hohe Verschleißfestigkeit auszeichnen sollte, um eine hohe Standzeit der Garnitur zu gewährleisten. Aufgrund dieser unterschiedlichen Materialanforderungen ergibt sich bei der Durchführung der bekannten Verfahren eine große Beschränkung bei Auswahl der Ausgangsmaterialien.

Bei dem erfindungsgemäßen Verfahren ist es zur Überwindung dieses Nachteils möglich, daß zumindest zwei der zu verarbeitenden Ausgangsdrähte aus sich voneinander unterscheidenden Materialien bestehen. Beispielsweise kann zumindest ein Draht aus unlegiertem Stahl (z.B. C 10-Stahl) und zumindest ein Draht aus legiertem Stahl bestehen.

Bei der Herstellung von Profildrähten nach dem erfindungsgemäßen Verfahren ist es zur Vermeidung von großen Deformationsgraden besonders vorteilhaft, wenn zumindest ein Ausgangsdraht vor dem Zusammenfügen bereits in ein bestimmtes Profil gebracht worden ist. Das Verbinden der Drähte erfolgt vorzugsweise durch Schweißen. Besonders bevorzugt ist dabei Elektronenstrahlschweißen in Hochvakuum, weil dadurch eine besonders saubere Verbindung ohne Zusatzstoffe gewährleistet wird. Nach dem Schweißen können die Drähte geglüht werden, um eventuell aufgetretene Zunahmen von Spannungen und Härten zurückzuführen. Das Profilpressen kann durch Profilwalzen und/oder profilziehen erfolgen. Je nach Material und gefordertem Deformierungsgrad kann das Walzen und/oder Ziehen in mehreren Kalt- und/oder Warmwalz- und/oder -Ziehstufen erfolgen. Dabei ist es wiederum besonders vorteilhaft, die Drähte nach jeder Kaltwalz bzw. -Ziehstufe zur Rückführung eventuell aufgetretener Spannung und Härten zu glühen.

Im folgenden wird das erfindungsgemäße Verfahren anhand der Zeichnung erläutert. Es zeigen:
- Fig. 1: die verschiedenen Verarbeitungsstufen A bis C zur Herstellung einer ersten Ganzstahlgarnitur nach dem erfindungsgemäßen Verfahren und
- Fig. 2: die verschiedenen Verarbeitungsstufen A bis C zur Herstellung einer zweiten Ganzstahlgarnitur nach dem erfindungsgemäßen Verfahren.

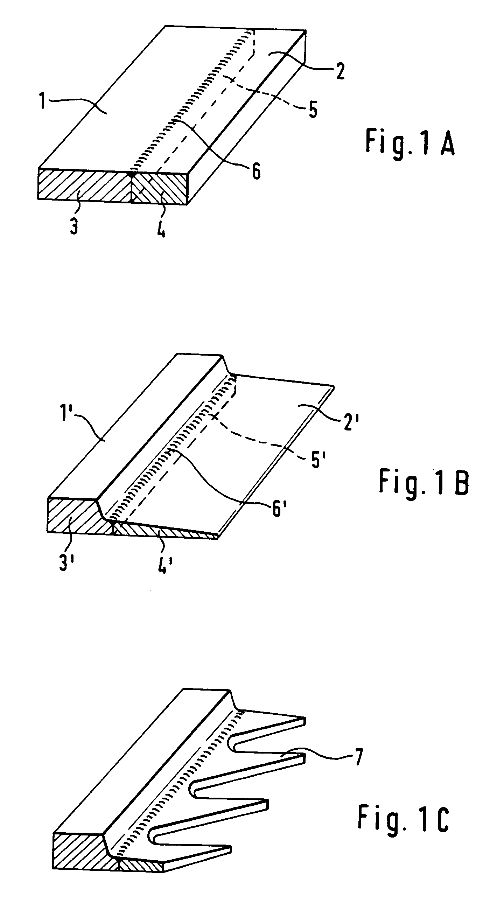

Bei dem anhand der Fig. 1 erläuterten Verfahren finden zwei Ausgangsdrähte 1 und 2 Anwendung, von denen der Ausgangsdraht 1 aus unlegiertem C 10-Stahl und der Ausgangsdraht 2 aus hochlegiertem und verschleißfestem CrMo-Stahl besteht. Diese Ausgangsdrähte 1 und 2 werden zunächst auf nicht näher veranschaulichte Weise auf jeweils einen rechteckigen Querschnitt 3 bzw. 4 gebracht und, wie in Fig. 1a dargestellt entlang eines Verbindungsgebietes 5 zusammengefügt. Die Ausgangsdrähte 1 und 2 sind dabei so geformt, daß die Schmalseiten der Rechteckquerschnitte in ihrer Länge übereinstimmen. Die Drähte werden so zusammengefügt, daß sich die Schmalseiten der Ausgangsdrähte miteinander decken. In zusammengefügtem Zustand werden die Drähte im Hochvakuum durch Elektronenstrahlschweißen miteinander verbunden. Die dadurch entstehende, sich geradlinig in Längsrichtung erstreckende Schweißnaht ist in Fig. 1A mit 6 bezeichnet. Nach dem Elektronenstrahlschweißen werden die miteinander verbundenen Drähte geglüht, um aufgetretene Spannungen und Härteunterschiede zurückzuführen.

Bei der Herstellung des in Fig. 1 B gezeigten Profildrahtes werden die zusammengefügten Drähte in mehreren Kaltwalzstufen profilgepreßt. Dabei wird jede einzelne Kaltwalzstufe vor dem Erreichen der maximalen Verformbarkeit der einzelnen Ausgangsdrähte beendet. Während des Kaltwalzens auftretende Spannungen und Härteunterschiede werden nach jeder Kaltwalzstufe durch Glühen zurückgeführt. Das Kaltwalzen wird so durchgeführt, daß die Verhältnisse der Querschnittsflächen 3 und 4 bzw. 3' und 4' zueinander gleichbleiben. Dadurch wird erreicht, daß die Flächen 5 bzw. 5', entlang welcher die Ausgangsdrähte miteinander verbunden werden, nicht rechtwinklig zur Längsrichtung deformiert werden. Insbesondere wird dadurch erreicht, daß die Schweißnaht 6' sich auch nach dem Profilpressen geradlinig in Längsrichtung erstreckt und der Profildraht in Längsrichtung keine Krümmung aufweist. Der in Fig. 1B dargestellte Profildraht kann als Ausgangsprodukt für eine Ganzstahlgarnitur dienen. Der aus unlegiertem C 10-Stahl bestehende Abschnitt 1' dient dabei als Fußteil der Garnitur und der aus hochlegiertem CrMo-Stahl bestehende Abschnitt 2' dient als Blatteil. Zur vollständigen Herstellung der Garnitur werden in den Blatteil 2' Zähne 7 gestanzt und diese anschließend durch Glühen bei etwa 1200°C und anschließendes Abschrecken gehärtet. Zur Verbesserung der Härteeigenschaften der Zähne werden diese nach dem Härten angelassen. Da der Profildraht aus zwei zusammengeschweißten Teilen besteht, wird er nicht durchgehärtet.

Wie vorstehend erläutert, kann mit dem erfindungsgemäßen Verfahren eine Ganzstahlgarnitur hergestellt werden, deren Fußteil eine gute Biegsamkeit und deren Blatteil eine hohe Verschleißfestigkeit aufweist, ohne Beschränkungen bei der Auswahl der Ausgangsmaterialien zu unterliegen.

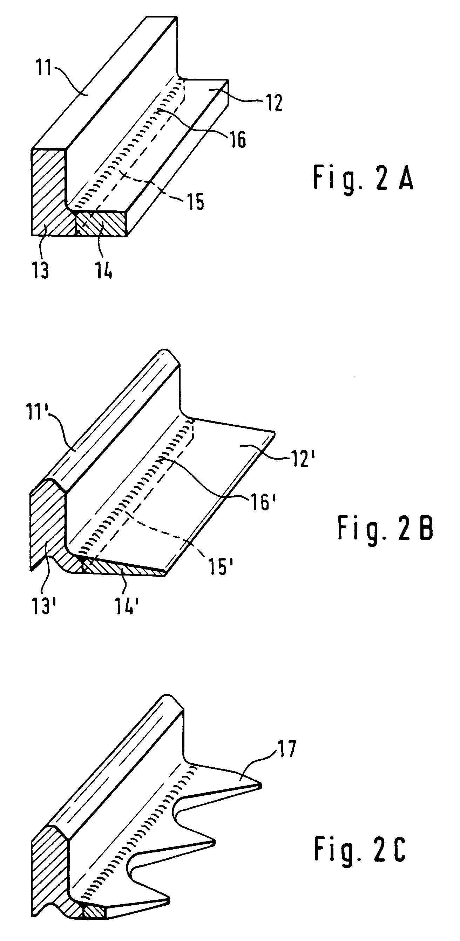

Das Verfahren zur Herstellung einer Ganzstahlgarnitur nach Fig. 2 unterscheidet sich lediglich dahingehend von dem anhand der Fig. 1 dargestellten Verfahren, daß beim Zusammenfügen der wiederum im wesentlichen auf einen rechteckigen Querschnitt gebrachten Ausgangsdrähte 11 und 12 die Schmalseite des Drahtes 12 an der Längsseite des Drahtes 11 zur Anlage gelangt und das Verbindungsgebiet 15 nur einen Teil der Längsseite des Drahtes 11 abdeckt. Das Profilpressen wird wieder so durchgeführt, daß die Verhältnisse der Querschnittsflächen 13 und 14 bzw. 13' und 14' zueinander konstant bleiben. Folglich erstreckt sich die Schweißnaht 16 auch bei dem in Fig. 2B dargestellten Zwischenprodukt geradlinig in Längsrichtung, und das Verbindungsgebiet 15' weist keine Deformation in Längsrichtung auf.

Anhand des in Fig. 2 dargestellten Verfahrens wird besonders deutlich, daß durch angemessene Formgebung und geeignete Auswahl des Verbindungsgebiets der Ausgangsdrähte die Deformation der verbundenen Drähte durch das Profilpressen geringgehalten werden kann.

Das erfindungsgemäße Verfahren ist nicht auf die anhand der Zeichnung beschriebenen Ausführungsmöglichkeiten beschränkt. Beispielsweise können andere Materialien für die Ausgangsdrähte verwendet, mehr als zwei Ausgangsdrähte zusammengefügt oder andere Verfahren zur Herstellung der Verbindung zwischen den Drähten, wie z.B. Hartlöten, Induktionsschweißen oder Kaltschweißen, angewandt werden. Als Material für die Ausgangsdrähte können insbesondere auch keramische Werkstoffe benutzt werden. Auch ist es möglich, mit dem erfindungsgemäßen Verfahren andere Produkte als Ganzstahlgarnituren, wie z.B. Deckelbeschläge, herzustellen, d.h. Produkte, bei denen es darauf ankommt, daß hochbeanspruchte Teilbereiche aus besonders verschleißfesten Materialien bestehen.

## Patentansprüche

1. Verfahren zur Herstellung von Profildraht durch Profilpressen des Ausgangsdrahtes, insbesondere zur Herstellung von Ganzstahlgarnituren, mit folgenden Schritten:
a) Zusammenfügen und Verbinden von zumindest zwei Ausgangsdrähten entlang von im wesentlichen in Längsrichtung der Drähte verlaufenden Gebieten
b) Profilpressen der verbundenen Ausgangsdrähte unter Konstanthalten der Verhältnisse der Querschnittsflächen senkrecht zur Längsrichtung der Ausgangsdrähte zueinander.

2. Verfahren nach Anspruch 1, dadurch gekennzeichnet, daß zumindest zwei Ausgangsdrähte aus sich voneinander unterscheidenden Materialien bestehen.

3. Verfahren nach einem der vorhergehenden Ansprüche, dadurch gekennzeichnet, daß zumindest ein Ausgangsdraht aus unlegiertem Stahl und zumindest ein Ausgangsdraht aus legiertem Stahl besteht.

4. Verfahren nach Anspruch 3, dadurch gekennzeichnet, daß der unlegierte Stahl C10-Stahl ist.

5. Verfahren nach einem der vorhergehenden Ansprüche, dadurch gekennzeichnet, daß zumindest ein Ausgangsdraht vor dem Zusammenfügen in ein Profil gepreßt ist.

6. Verfahren nach einem der vorhergehenden Ansprüche, dadurch gekennzeichnet, daß das Verbinden durch Verschweißen erfolgt.

7. Verfahren nach Anspruch 6, dadurch gekennzeichnet, daß das Verschweißen durch Elektronenstrahlschweißen im Hochvakuum ohne Zugabe von Zusatzwerkstoffen erfolgt.

8. Verfahren nach einem der Ansprüche 6 oder 7, dadurch gekennzeichnet, daß die Ausgangsdrähte nach dem Schweißen geglüht werden.

9. Verfahren nach einem der vorhergehenden Ansprüche, dadurch gekennzeichnet, daß das Profilpressen durch Profilwalzen und/oder Profilziehen erfolgt.

10. Verfahren nach Anspruch 9, dadurch gekennzeichnet, daß das Profilwalzen und/oder -Ziehen in einer Kombination von mehreren Kalt- und/oder Warmwalz- und/oder -Ziehstufen erfolgt.

11. Verfahren nach Anspruch 10, dadurch gekennzeichnet, daß die Ausgangsdrähte nach den Kaltwalz- und/oder - Ziehstufen jeweils geglüht werden.

12. Verfahren nach einem der vorhergehenden Ansprüche, dadurch gekennzeichnet, daß zwei Ausgangsdrähte zusammengefügt und verbunden werden.

13. Verfahren nach Anspruch 12, dadurch gekennzeichnet, daß beide Ausgangsdrähte rechtwinklig gewalzte Flachdrähte sind.

14. Verfahren nach Anspruch 13, dadurch gekennzeichnet, daß die zusammengefügten und verbundenen Ausgangsdrähte in die Form einer Ganzstahlgarnitur mit Fußteil und Blatteil gepreßt werden.

15. Verfahren nach Anspruch 14, dadurch gekennzeichnet, daß der Fußteil aus unlegiertem Stahl besteht und der Blatteil aus legiertem Stahl besteht.

16. Verfahren nach einem der Ansprüche 14 oder 15, dadurch gekennzeichnet, daß in das Blatteil nach dem Walzen Zähne gestanzt werden und die Zähne gehärtet werden.

17. Verfahren nach Anspruch 16, dadurch gekennzeichnet, daß die gehärteten Zähne angelassen werden.

## Claims

1. Method of producing profile wire by profile pressing the starting wire, in particular for producing metallic card clothings, comprising the following steps:
a) joining and connecting at least two starting wires along regions running essentially in the longitudinal direction of the wires
b) profile pressing of the connected starting wires while keeping the ratios of the cross-sectional areas perpendicular to the longitudinal direction of the starting wires constant with respect to one another.

2. Method according to Claim 1, characterized in that at least two starting wires consist of materials which differ from one another.

3. Method according to one of the preceding claims, characterized in that at least one starting wire consists of unalloyed steel and at least one starting wire consists of alloyed steel.

4. Method according to Claim 3, characterized in that the unalloyed steel is C10 steel.

5. Method according to one of the preceding claims, characterized in that at least one starting wire is pressed into a profile before the joining operation.

6. Method according to one of the preceding claims, characterized in that the connecting is carried out by welding.

7. Method according to Claim 6, characterized in that the welding is carried out by high-vacuum electron beam welding, without the addition of fillers.

8. Method according to one of Claims 6 or 7, characterized in that the starting wires are annealed after welding.

9. Method according to one of the preceding claims, characterized in that the profile pressing is carried out by profile rolling and/or profile drawing.

10. Method according to Claim 9, characterized in that the profile rolling and/or drawing is carried out in a combination of several cold- and/or hot-rolling and/or -drawing steps.

11. Method according to Claim 10, characterized in that the starting wires are annealed after each of the cold-rolling and/or cold-drawing steps.

12. Method according to one of the preceding claims, characterized in that two starting wires are joined and connected.

13. Method according to Claim 12, characterized in that the two starting wires are flat wires rolled at right angles.

14. Method according to Claim 13, characterized in that the joined and connected starting wires are pressed into the form of a metallic card clothing with a root part and a blade part.

15. Method according to Claim 14, characterized in that the root part consists of unalloyed steel and the blade part consists of alloyed steel.

16. Method according to either of Claims 14 or 15, characterized in that teeth are stamped into the blade part after rolling and the teeth are hardened.

17. Method according to Claim 16, characterized in that the hardened teeth are tempered.

## Revendications

1. Procédé de fabrication de fils métalliques profilés, par pressage de profilage du fil métallique initial, en particulier pour la fabrication de garnitures tout acier, comportant les étapes ci-après :
a) assemblage et liaison d'au moins deux fils métalliques initiaux, le long de zones s'étendant sensiblement dans la direction longitudinale des fils métalliques,
b) pressage de profilage des fils métalliques initiaux reliés, avec maintien constant des caractéristiques des surfaces de sections transversales, perpendiculairement par rapport à la direction longitudinale des fils métalliques initiaux, l'un par rapport à l'autre.

2. Procédé selon la revendication 1, caractérisé en ce qu'au moins deux fils métalliques initiaux sont composés de matériaux différents.

3. Procédé selon l'une des revendications précédentes, caractérisé en ce qu'au moins un fil métallique initial est composé d'acier non allié et au moins un fil métallique initial est composé d'acier allié.

4. Procédé selon la revendication 3, caractérisé en ce que l'acier non allié est un acier C10.

5. Procédé selon l'une des revendications précédentes, caractérisé en ce qu'au moins un fil métallique initial est pressé au profil avant assemblage.

6. Procédé selon l'une des revendications précédentes, caractérisé en ce que la liaison s'effectue par soudage.

7. Procédé selon la revendication 6, caractérisé en ce que le soudage s'effectue par soudage à bombardement électronique, sous-vide poussé, sans adjonction d'additifs.

8. Procédé selon l'une des revendications 6 ou 7, caractérisé en ce que les fils métalliques initiaux sont recuits après soudage.

9. Procédé selon l'une des revendications précédentes, caractérisé en ce que le pressage de profilage s'effectue par laminage aux rouleaux de profilage et/ou par étirage de profilage.

10. Procédé selon la revendication 9, caractérisé en ce que le laminage aux rouleaux de profilage et/ou l'étirage de profilage s'effectuent en une combinaison de plusieurs étapes de laminage aux rouleaux à froid et/ou à chaud et/ou d'étirage.

11. Procédé selon la revendication 10, caractérisé en ce que les fils métalliques initiaux sont chaque fois recuits après les étapes de laminage à rouleaux à froid et/ou d'étirage.

12. Procédé selon l'une des revendications précédentes, caractérisé en ce que deux fils métalliques initiaux sont assemblés et reliés.

13. Procédé selon la revendication 12, caractérisé en ce que deux fils métalliques initiaux sont des fils métalliques plats à profil rectangulaire, produits par laminage aux rouleaux.

14. Procédé selon la revendication 13, caractérisé en ce que les fils métalliques initiaux assemblés et reliés sont pressés, pour obtenir la forme d'une garniture tout acier, avec une partie pied et une partie lame.

15. Procédé selon la revendication 14, caractérisé en ce que la partie pied est en acier non allié et la partie lame est en acier allié.

16. Procédé selon l'une des revendications 14 ou 15, caractérisé en ce que des dents sot découpées par estampage dans la partie lame après laminage et ces dents sont durcies par trempage.

17. Procédé selon la revendication 16, caractérisé en ce que les dents durcies par trempage sont soumises à un traitement de revenu.
